(19) Europäisches Patentamt
European Patent Office
Office européen des brevets

(11) **EP 4 742 496 A1**

(12) **EUROPÄISCHE PATENTANMELDUNG**

(43) Veröffentlichungstag:
**13.05.2026  Patentblatt 2026/20**

(21) Anmeldenummer: **24211470.0**

(22) Anmeldetag: **07.11.2024**

(51) Internationale Patentklassifikation (IPC):
*H02J 13/00* (2026.01)  *H02J 3/00* (2026.01)

(52) Gemeinsame Patentklassifikation (CPC):
**H02J 13/12;** H02J 3/0012; H02J 2103/30

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Metzger, Michael**
**85570 Markt Schwaben (DE)**
• **Stursberg, Paul**
**80469 München (DE)**
• **Tomaselli, Domenico**
**81673 München (DE)**

(74) Vertreter: **Siemens Patent Attorneys**
**Postfach 22 16 34**
**80506 München (DE)**

(54) **VERFAHREN ZUR ERMITTLUNG EINER NETZTOPOLOGIEVERTEILUNG EINES STROMNETZES SOWIE DESSEN VERWENDUNG ZUR STEUERUNG DES STROMNETZES**

(57) Verfahren zur Ermittlung einer Netztopologieverteilung eines Stromnetzes sowie dessen Verwendung zur Steuerung des Stromnetzes

Es wird ein computergestütztes Verfahren zur Ermittlung einer Wahrscheinlichkeitsverteilung $p(G|X, Y)$ (3) von Netztopologien $G$ eines Stromnetzes vorgeschlagen, wobei das Stromnetz mehrere Ortsnetzstationen (O1, O2) und Endverbraucher (E1, E2) aufweist, wobei $X$ mit Leistungsmesswerten (21) und $Y$ mit Spannungsmesswerten (22) des Stromnetzes assoziiert ist. Das Verfahren ist gekennzeichnet durch folgende Schritte:
- (S1) Ermitteln einer ersten A-posteriori-Verteilung $p(a|X, Y)$ (1), wobei $a$ eine Zuordnung der Endverbraucher (E1, E2) zu den Ortsnetzstationen (O1, O2) ist;
- (S2) Ermitteln einer zweiten A-posteriori-Verteilung $p(G|a, X, Y)$ (2), wobei hierbei lediglich Zuordnungen mit $p(a|X, Y) > p_{min}$ berücksichtigt werden, und $p_{min} \geq 0$ ein festgelegter minimaler Schwellenwert ist; und
- (S3) Ermitteln der Wahrscheinlichkeitsverteilung $p(G|X, Y)$ (3) der Netztopologien G des Stromnetzes mittels der ersten und zweiten A-posteriori-Verteilung (2, 3) durch $p(G|X, Y) = \Sigma_a p(G|a, X, Y) \cdot p(a|X, Y)$.

Weiterhin betrifft die Erfindung ein Verfahren zur Ermittlung einer Netztopologie G* eines Stromnetzes, eine Steuereinheit zur Steuerung eines Stromnetzes sowie ein Computerprogrammprodukt.

FIG 2

EP 4 742 496 A1

**Beschreibung**

Verfahren zur Ermittlung einer Netztopologieverteilung eines Stromnetzes sowie dessen Verwendung zur Steuerung des Stromnetzes

Die Erfindung betrifft ein Verfahren gemäß dem Oberbegriff des Patentanspruches 1, ein Verfahren gemäß dem Oberbegriff des Patentanspruches 11, eine Steuereinheit gemäß dem Oberbegriff des Patentanspruches 13 sowie ein Computerprogrammprodukt gemäß dem Oberbegriff des Patentanspruches 14.

Die zunehmende Verbreitung dezentraler erneuerbarer Energien, beispielsweise von Ladestationen für Elektrofahrzeuge oder von Wärmepumpen, erfordert typischerweise eine Modernisierung und Erweiterung der Netzinfrastruktur auf Mittelspannungs- und/oder Niederspannungsebene.

Aufgrund der langen Historie vieler Stromnetze beziehungsweise Verteilnetze liegen typischerweise geringe bis keine vertrauenswürdigen und unmittelbar verwendbaren Informationen über die Netztopologie der Stromnetze vor.

Somit sind Netzmodelle erforderlich, mittels welchen die bestehende Infrastruktur topologisch rekonstruiert werden kann. Diese stützen sich oft auf spärliche Informationen bezüglich des jeweiligen Stromnetzes.

Während die Informationen über den Standort von Ortsnetzstationen (englisch: secondary substations) und Endverbrauchern (englisch: end-consumers) aus Assetmanagementsystemen und/oder Abrechnungssystemen übernommen werden können, ist die Netztopologie beziehungsweise Topologie bestehender Verteilnetze typischerweise nicht bekannt und somit unsicher. Weiterhin liegen Niederspannungsleitungen typischerweise im Erdreich, was eine Überprüfung der gegebenenfalls verfügbaren Topologieinformationen schwierig und kostenintensiv macht.

Eine Ermittlung der Netztopologie eines Stromnetzes ist somit ein stark unterdeterminiertes Problem, sodass nicht erwartet werden kann, eine einzige, vertrauenswürdige Netztopologie beziehungsweise Lösung zu erhalten. Somit sind probabilistische Ansätze erforderlich, die die genannten technischen Unsicherheiten mittels Wahrscheinlichkeiten beziehungsweise mittels Wahrscheinlichkeitsverteilung erfassen. Hierbei können grundsätzlich verfügbare Messwerte berücksichtigt werden, um die Unsicherheit zu verringern und sicherzustellen, dass die ermittelte Wahrscheinlichkeitsverteilung nur Netztopologien umfasst, die die genannten Messwerte respektieren.

Es ist bekannt, die Netztopologie eines Stromnetzes mittels Geoinformationen, beispielsweise mittels Straßenverläufen und den Standorten der Endverbraucher, abzuschätzen. Alternativ hierzu sind probabilistische Verfahren bekannt, die ein Ensemble unterschiedlicher, nicht georeferenzierter Netztopologien erzeugen, die den topologischen und/oder elektrischen Eigenschaften realer Verteilungsnetze entsprechen.

Keiner der genannten Ansätze kann jedoch die Unsicherheit, abgesehen von der Verwendung eines statistischen Mittels, im Fall von sehr begrenzten verfügbaren Informationen über die Topologie zufriedenstellend berücksichtigen.

Der vorliegenden Erfindung liegt die Aufgabe zugrunde, ein verbessertes Verfahren zur Ermittlung einer probabilistischen Netztopologie eines Stromnetzes bereitzustellen.

Die Aufgabe wird durch ein Verfahren mit den Merkmalen des unabhängigen Patentanspruches 1, durch ein Verfahren mit den Merkmalen des unabhängigen Patentanspruches 11, durch eine Steuereinheit mit den Merkmalen des unabhängigen Patentanspruches 13 sowie durch ein Computerprogrammprodukt mit den Merkmalen des unabhängigen Patentanspruches 14 gelöst. In den abhängigen Patentansprüchen sind vorteilhafte Ausgestaltungen und Weiterbildungen der Erfindung angegeben.

Das erfindungsgemäße computergestützte Verfahren zur Ermittlung einer Wahrscheinlichkeitsverteilung $p(G|X, Y)$ von Netztopologien G (Netztopologieverteilung) eines Stromnetzes, wobei das Stromnetz mehrere Ortsnetzstationen und Endverbraucher aufweist, wobei $X$ mit Leistungsmesswerten und $Y$ mit Spannungsmesswerten des Stromnetzes assoziiert ist, ist gekennzeichnet durch wenigstens folgende Schritte:

- Ermitteln einer ersten A-posteriori-Verteilung $p(a|X, Y)$, wobei $\alpha$ eine Zuordnung der Endverbraucher zu den Ortsnetzstationen ist;
- Ermitteln einer zweiten A-posteriori-Verteilung $p(G|a, X, Y)$, wobei hierbei lediglich Zuordnungen mit $p(a|X, Y) > p_{min}$ berücksichtigt werden, und $p_{min} \geq 0$ ein festgelegter minimaler Schwellenwert ist; und
- Ermitteln der Wahrscheinlichkeitsverteilung $p(G|X, Y)$ der Netztopologien G des Stromnetzes mittels der ersten und zweiten A-posteriori-Verteilung durch $p(G|X, Y) = \Sigma_a p(G|a, X, Y) \cdot p(a|X, Y)$.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Das Stromnetz ist ein elektrisches Verteilnetz, insbesondere ein Mittelspannungsnetz und/oder Niederspannungsnetz. Das Stromnetz weist mehrere Netzknoten auf, die insbesondere mit den Ortsnetzstationen und/oder den Endverbrauchern des Stromnetzes assoziiert sind. Weiterhin weist das Stromnetz typischerweise mehrere Leitungen auf, die sich von einem der Netzknoten zu einem weiteren der Netzknoten erstrecken. Hierbei kann die Topologie des Stromnetzes Stränge (englisch: feeder) und/oder Ringe umfassen. Die Topologie beziehungsweise Netztopologie (englisch: grid topology) des Stromnetzes kann ebenfalls als Netzmodell (englisch: grid model) bezeichnet werden. Weiterhin ist eine Modellierung des Stromnetzes beziehungsweise seiner Topologie als mathematischer Graph möglich.

Die Verteilungen beziehungsweise die Wahrscheinlichkeitsverteilungen können diskret und/oder als Wahrscheinlichkeitsdichte bereitgestellt werden. Grundsätzlich können die Verteilungen über ihre zugehörigen Variablen integriert werden. Im diskreten Fall ist unter einer Integration eine entsprechende Summierung zu verstehen. Die Verteilungen sind typischerweise - aufgrund der Anzahl von Netzknoten und/oder Leitungen - mehrdimensional. Insbesondere sind diese als mehrdimensionale Normalverteilungen beziehungsweise Gaußverteilungen ausgebildet.

Die Wahrscheinlichkeitsverteilung der Netztopologien beziehungsweise die Netztopologieverteilung beschreibt, wie wahrscheinlich eine bestimmte Netztopologie für das Stromnetz ist.

Grundsätzlich können die A-posteriori-Verteilung mittels des Satzes von Bayes über ihre zugehörigen Likelihood-Funktionen (Messverteilungen beziehungsweise bedingte Messverteilungen der Messwerte $X$, $Y$) und A-priori-Verteilungen, beispielsweise die A-priori-Verteilung der Zuordnungen, ermittelt werden.

Ein Leistungsmesswert und/oder Spannungsmesswert ist mit dem Stromnetz assoziiert, wenn dieser innerhalb des Stromnetzes, insbesondere an einem Netzknoten und/oder an einer Leitung des Stromnetzes, erfasst wurde. Typischerweise sind die genannten Messwerte zeitabhängig.

Die Messwerte $X$ sind mit Leistungsmesswerten, das heißt mit Messungen der elektrischen Leistung, insbesondere der elektrischen Wirkleistung und/oder Blindleistung, die insbesondere an den Ortsnetzstationen erfasst werden, assoziiert. Hierbei sind die Leistungen typischerweise zeitabhängig. Mit anderen Worten ist $X = X(t) = X_t$. Werden somit beispielsweise für $K$ Ortsnetzstationen und für $T$ Zeitpunkte Leistungsmesswerte erfasst und/oder bereitgestellt, so können die Leistungsmesswerte $X$ als $T \times K$ dimensionale Matrix dargestellt beziehungsweise zusammengefasst werden.

Die Messwerte $Y$ sind mit Spannungsmessungen, das heißt mit Messungen der elektrischen Spannung, insbesondere ihres Betrages und/oder ihres Winkels, die insbesondere an den Endverbrauchern erfasst werden, assoziiert. Hierbei sind die Spannungen typischerweise zeitabhängig. Mit anderen Worten ist $Y = Y(t) = Y_t$. Werden somit beispielsweise für $K$ Ortsnetzstationen, $N$ Endverbrauchern und für $T$ Zeitpunkte Spannungsmesswerte erfasst und/oder bereitgestellt, so können die Spannungsmesswerte Y als $T \times K \times N$ dimensionale Matrix dargestellt beziehungsweise zusammengefasst werden.

Gemäß einem ersten Schritt des Verfahrens wird eine erste A-posteriori-Verteilung $p(a|X, Y)$ ermittelt, wobei $a$ eine Zuordnung der Endverbraucher zu den Ortsnetzstationen ist.

Eine Zuordnung $a$ ist somit eine Abbildung, die jeden Endverbraucher zu wenigstens einer der Ortsnetzstationen zuordnet. Insbesondere ist die Zuordnung derart ausgebildet, dass jeder Endverbraucher lediglich genau zu einer der Ortsnetzstationen zugeordnet wird. Eine Zuordnung weist somit im Gegensatz zur Netztopologie eine deutlich geringere Information über das Stromnetz und seinen Verbindungen zwischen seinen Netzknoten auf, sodass eine Zuordnung in diesem Sinne gröber als eine Netztopologie ist.

Die erste A-posteriori-Verteilung $p(a|X, Y)$ beschreibt somit als bedingte Wahrscheinlichkeit, wie wahrscheinlich eine Zuordnung $a$ bei gegebenen Messungen beziehungsweise Messwerten $X$, $Y$ ist.

Die erste A-posteriori-Verteilung $p(a|X, Y)$ kann grundsätzlich mittels des Satzes von Bayes über $p(a|X, Y) \propto p(X|a, Y) \cdot p(Y|a) \cdot p(a)$ ermittelt werden, wobei $p(X|a, Y)$ und $p(Y|a)$ die jeweiligen Messverteilungen (Likelihood-Funktionen) und $p(a)$ die A-priori-Verteilung der Zuordnungen ist. Die A-priori-Verteilung der Zuordnungen kann mittels eines Sample-Verfahrens ermittelt und/oder bereitgestellt werden. Hierzu können bekannte Informationen, beispielsweise geographische Daten, insbesondere über Straßenverläufe, verwendet werden. Die Messverteilungen können mittels Normalverteilungen aus den Messdaten ermittelt und/oder bereitgestellt werden.

Gemäß einem zweiten Schritt des Verfahrens wird eine zweite A-posteriori-Verteilung $p(G|a, X, Y)$ ermittelt, wobei hierbei lediglich Zuordnungen mit $p(a|X, Y) > p_{min}$ berücksichtigt werden, und $p_{min} \geq 0$ ein festgelegter minimaler Schwellenwert ist.

Die zweite A-posteriori-Verteilung $p(G|a, X, Y)$ beschreibt somit als bedingte Wahrscheinlichkeit, wie wahrscheinlich eine Netztopologie $G$ des Stromnetzes bei gegebener Zuordnung $a$ und gegebenen Messungen beziehungsweise Messwerten $X$, $Y$ ist.

Die A-posteriori-Verteilung $p(G|a, X, Y)$ kann grundsätzlich mittels des Satzes von Bayes über $p(a|X, Y) \propto p(G|a, X, Y) \propto p(X|G, a, Y) \cdot p(Y|G, a) \cdot p(G|a)$ ermittelt werden, wobei $p(X|G, a, Y)$ und $p(Y|G, a)$ die jeweiligen Messverteilungen (Likelihood-Funktionen) sind. Die bedingte Wahrscheinlichkeit $p(G|a)$ kann beispielsweise als Gleichverteilung angenommen und/oder mittels eines numerischen Algorithmus, der insbesondere Lastflussberechnungen für das Stromnetz umfasst beziehungsweise berücksichtigt, gesampelt werden. Die Messverteilungen können mittels Normalverteilungen aus den Messdaten ermittelt und/oder bereitgestellt werden.

Für die zweite A-posteriori-Verteilung $p(G|a, X, Y)$ der Netztopologien werden erfindungsgemäß lediglich Zuordnungen berücksichtigt, die bei gegebenen Messwerten ausreichend wahrscheinlich sind. Hierbei sind Zuordnungen ausreichend wahrscheinlich, wenn $p(a|X, Y) > p_{min}$ ist, wobei $p_{min} \geq 0$ der festgelegte minimale Schwellenwert ist. Somit werden insbesondere hauptsächlich Zuordnungen berücksichtigt, die bezüglich der Messungen technisch ausreichend wahrscheinlich sind. Hierbei weist $p_{min}$ bevorzugt einen Wert im Bereich von 0 bis 0,5, besonders bevorzugt im Bereich von 0,3 bis 0,5 auf.

Vorteilhafterweise werden somit im zweiten Schritt zur Ermittlung der zweiten A-posteriori-Verteilung nicht alle möglichen Zuordnungen berücksichtigt, sondern diese, die gemäß den gegebenen Messwerten technisch ausreichend wahrscheinlich sind. Dies stellt sicher, dass im zweiten Schritt hauptsächlich die technisch und/oder physikalisch relevanten Zuordnungen berücksichtigt werden.

Durch die erfindungsgemäße Aufteilung des Verfahrens in die genannten zwei Stufen, ergibt sich über die Zuordnungen somit eine technisch sinnvolle Vorauswahl von möglichen Netztopologien. Dadurch wird das Verfahren zur Ermittlung der Verteilung der Netztopologien numerisch effizienter und kann somit insbesondere für komplexe, umfangreiche und reale Stromnetze effizient verwendet werden. Das ist insbesondere deshalb der Fall, da ohne den erfindungsgemäßen Schritt der Auswahl von technisch ausreichend wahrscheinlichen Zuordnungen eine probabilistische Ermittlung der Netztopologie typischerweise aufgrund der hohen Rechenzeiten nicht praktikabel ist. Das vorliegende Verfahren ermöglicht es somit, gerade die technisch und/oder physikalisch sinnvollen Netztopologien in praktikablen Rechenzeiten zu berücksichtigen.

Gemäß einem dritten Schritt des Verfahrens wird die Wahrscheinlichkeitsverteilung $p(G|X, Y)$ der Netztopologien G des Stromnetzes mittels der ersten und zweiten A-posteriori-Verteilung durch $p(G|X, Y) = \Sigma_a p(G|a, X, Y) \cdot p(a|X, Y)$ ermittelt.

Das erfindungsgemäße Verfahren ermittelt somit die Verteilung der Netztopologien nicht unmittelbar, indem alle möglichen Netztopologien gesampelt werden, sondern ermittelt diese in einem im Wesentlichen zweistufigen Verfahren. Zunächst wird im ersten Schritt die Verteilung der Zuordnungen bei gegebenen Messwerten ermittelt. Dies ist numerisch deutlich weniger aufwendig, da eine Zuordnung wesentlich gröber im Vergleich zu einer Netztopologie ist und somit weniger Informationen umfasst. Im zweiten Schritt werden dann erfindungsgemäß lediglich die ausreichend sinnvollen beziehungsweisen die ausreichend wahrscheinlichsten Zuordnungen berücksichtigt. Dadurch wird die Anzahl der zu betrachteten Netztopologien technisch sinnvoll eingeschränkt, sodass die numerische Effizienz und Stabilität verbessert werden. Zudem wird sichergestellt, dass die Anzahl der betrachteten Netztopologien technisch und physikalisch sinnvoll eingeschränkt wird. Insgesamt kann dadurch die Verteilung der Netztopologien, insbesondere für komplexe und umfangreiche Stromnetze, ausreichend genau und numerisch effizient ermittelt werden.

Weiterhin weist die Erfindung wenigstens die folgenden Vorteile auf:

- Die ermittelten Verteilungen berücksichtigen die verfügbaren Systemmessungen beziehungsweise die verfügbaren Messwerte und berücksichtigen zudem ihre zugrunde liegende Unsicherheit.

- Das Verfahren kann ebenfalls bei sehr begrenzten Informationen über das Stromnetz, beispielsweise wenn lediglich der Standort der Ortsnetzstationen und der Endverbraucher bekannt ist, angewendet werden.

- Grundsätzlich ist das Verfahren unabhängig von der Durchdringung der Systemmessungen, das heißt unabhängig davon wie viele Messungen/Messwerte an welchem Ort vorliegen. Das Verfahren kann somit ebenfalls grundsätzlich ohne Systemmessungen durchgeführt werden, kann jedoch alle verfügbaren Messungen berücksichtigen.

- Je mehr Systemmessungen zur Verfügung stehen, desto genauer wird das Verfahren. Es gibt jedoch keine Mindestanforderung an die Durchdringung beziehungsweise an die Anzahl von vorliegenden Messwerten. Dies ist ein besonderer Vorteil, da für typische Stromnetze weder für Ortsnetzstationen noch für Endverbraucher eine vollständige Durchdringung der Messungen vorausgesetzt werden kann.

- Das zweistufige Verfahren ermöglicht für realistische, komplexe Stromnetze, die typischerweise mehrere hundert Endverbraucher aufweisen, eine numerisch effiziente und stabile Ermittlung der Verteilung der Netztopologien.

Weiterhin ermöglicht die vorliegende Erfindung beziehungsweise die erfindungsgemäß ermittelte Netztopologieverteilung:

- Eine robuste Analyse und Überwachung von Netzanlagen, beispielswiese Überlastung von Umspannwerken, Transformatoren, Ortsnetzstationen und/oder Verbindungsleitungen, unter Verwendung der ermittelten Netztopologieverteilung, da die zugrundeliegenden Systemmessungen und Unsicherheit berücksichtigen werden.

- Eine vorteilhafte Netzzustandsschätzung innerhalb von Verteilnetzmanagementsystemen und Systemen zur Überwachung der Spannungsqualität.

- Eine Entwicklung und einen Einsatz von verbesserten Regelungsstrategien, um Engpässe innerhalb des Netzes zu verringern, beispielsweise eine dynamische und verbesserte Abregelung von Photovoltaikanlagen zur Reduzierung von Überspannungen.

- Ein robustes und verbessertes Design bezüglich zukünftiger Netzausbaumaßnahmen, beispielsweise einer Aufrüstung eines Transformators, wenn eine Überlastung dort gemäß der Netztopologieverteilung zu erwarten ist.

Die ermittelte Netztopologieverteilung kann somit vorteilhafterweise in mehreren stromnetzbezogenen Anwendungsfällen verwendet werden.

Das erfindungsgemäße Verfahren zur Ermittlung einer Netztopologie G* eines Stromnetzes, wobei das Stromnetz mehrere Ortsnetzstationen und Endverbraucher aufweist, bei dem mit dem Stromnetz assoziierte Leistungsmesswerte $X$ und Spannungsmesswerte $Y$ bereitgestellt werden, ist gekennzeichnet dadurch, dass das Ermitteln der Netztopologie G* mittels einer gemäß der Erfindung und/oder einer ihrer Ausgestaltungen ermittelten Wahrscheinlichkeitsverteilung $p(G|X, Y)$ von Netztopologien G des Stromnetzes erfolgt.

Es ergeben sich zum erfindungsgemäßen Verfahren zur Ermittlung der Netztopologieverteilung gleichartige, gleichwertige und gleichwirkende Vorteile.

Die erfindungsgemäße Steuereinheit zur Steuerung eines Stromnetzes mit mehreren Ortsnetzstationen und Endverbrauchern umfassend eine Recheneinheit ist dadurch gekennzeichnet, dass die Recheneinheit dazu ausgebildet und eingerichtet ist, ein Verfahren zur Ermittlung der Netztopologieverteilung und/oder ein Verfahren zur Ermittlung einer Netztopologie gemäß der Erfindung und/oder einer ihrer Ausgestaltungen durchzuführen.

Es ergeben sich zum erfindungsgemäßen Verfahren zur Ermittlung der Netztopologieverteilung und/oder der Netztopologie gleichartige, gleichwertige und gleichwirkende Vorteile.

Das erfindungsgemäße Computerprogrammprodukt umfasst Befehle, die bei der Ausführung des Programms durch eine Recheneinheit, insbesondere einen Computer, diesen veranlassen, ein Verfahren zur Ermittlung der Netztopologieverteilung und/oder Netztopologie und/oder Schritte der genannten Verfahren auszuführen.

Es ergeben sich zum erfindungsgemäßen Verfahren zur Ermittlung der Netztopologieverteilung und/oder der Netztopologie gleichartige, gleichwertige und gleichwirkende Vorteile.

Gemäß einer vorteilhaften Ausgestaltung der Erfindung wird die erste A-posteriori-Verteilung $p(a|X, Y)$ mittels $p(a|X, Y) \propto p(X|a, Y) \cdot p(Y|a) \cdot p(a)$ ermittelt, wobei $p(X|a, Y)$ und $p(Y|a)$ die jeweiligen Messverteilungen (Likelihood-Funktionen) und $p(a)$ die A-Priori-Verteilung der Zuordnungen ist.

Hierbei ergibt sich $p(a|X, Y) \propto p(X|a, Y) \cdot p(Y|a) \cdot p(a)$ aus einer mehrfachen Anwendung des Satzes von Bayes. Das ist deshalb von Vorteil, da typischerweise die A-posteriori-Verteilung nicht bekannt ist. Die Likelihood-Funktionen $p(X|a, Y)$ und $p(Y|a)$ können hingegen aus den vorliegenden Informationen und Messwerten ermittelt werden. Beispielsweise werden diese durch mehrdimensionale Normalverteilungen (Gaußverteilungen) approximiert, wobei die Erwartungswerte und Kovarianzen der multidimensionalen Normalverteilungen die Messwerte und Unsicherheiten und gegebenenfalls die Korrelationen der Messwerte widerspiegeln. Die A-priori-Verteilung der Zuordnungen $p(a)$ kann mittels eines Sample-Verfahrens ermittelt werden.

Es ist somit besonders bevorzugt die erste A-posteriori-Verteilung $p(a|X, Y)$ durch $p(a|X, Y) \propto p(a|X) \propto p(X|a) \cdot p(a)$ zu approximieren.

Mit anderen Worten wird hierbei angenommen, dass die erste A-posteriori-Verteilung lediglich von den Leistungsmessungen $X$, insbesondere an den Ortsnetzstationen, abhängig ist. Hierbei kann die Likelihood-Funktion besonders bevorzugt durch mehrdimensionale Normalverteilungen gemäß

$$p(X|a) \sim \prod_{t \in T} \prod_{k \in K} \mathcal{N}(\mu_{k,t}, \sigma_{k,t}^2)$$

approximiert werden, wobei $K$ die Anzahl der Leistungsmessungen ist.

Mit anderen Worten wird in einer bevorzugten Weiterbildung der Erfindung $p(X|a)$ durch eine oder mehrere mehrdimensionale Normalverteilungen approximiert.

Gemäß einer vorteilhaften Ausgestaltung der Erfindung wird die zweite A-posteriori-Verteilung $p(G|a, X, Y)$ mittels $p(G|a, X, Y) \propto p(X|G, a, Y) \cdot p(Y|G, a) \cdot p(G|a)$ ermittelt, wobei $p(X|G, a, Y)$ und $p(Y|G, a)$ die jeweiligen Messverteilungen sind.

Hierbei ergibt sich $p(G|a, X, Y) \propto p(X|G, a, Y) \cdot p(Y|G, a) \cdot p(G|a)$ aus einer mehrfachen Anwendung des Satzes von Bayes. Das ist deshalb von Vorteil, da typischerweise die A-posteriori-Verteilung nicht bekannt ist. Die Likelihood-Funktionen $p(X|G, a, Y)$ und $p(Y|G, a)$ können hingegen aus den vorliegenden Informationen und Messwerten ermittelt werden. Beispielsweise werden diese durch mehrdimensionale Normalverteilungen (Gaußverteilungen) approximiert, wobei die Erwartungswerte und Kovarianzen der multidimensionalen Normalverteilungen die Messwerte und Unsicherheiten und gegebenenfalls die Korrelationen der Messwerte widerspiegeln.

Die bedingte Verteilung $p(G|a)$ kann bevorzugt als Gleichverteilung angenommen werden. Wird zusätzlich bevorzugt angenommen, dass $p(G|a, X, Y) \propto p(G|a, Y) \propto p(Y|G, a) \cdot p(G|a)$ ist, das heißt $p(G|a, X, Y)$ lediglich von den Spannungsmesswerten abhängig ist, so kann die vorteilhafte Näherung $p(G|a, X, Y) \propto p(G|a, Y) \sim \prod_{t \in T} \prod_{k \in K} p(Y_{k,t}|G_k, a)/N_k$ verwendet werden.

Es ist somit besonders bevorzugt die zweite A-posteriori-Verteilung $p(G|a, X, Y)$ durch $p(G|a, X, Y) \propto p(G|a, Y) \propto p(Y|G, a) \cdot p(G|a)$ zu approximieren.

Mit anderen Worten wird hierbei angenommen, dass die zweite A-posteriori-Verteilung lediglich von den Spannungsmessungen $Y$, insbesondere an den Endverbrauchern, abhängig ist. Hierbei kann die Likelihood-Funktion besonders bevorzugt wiederum durch mehrdimensionale Normalverteilungen gemäß $p(Y|G;a) \sim \mathcal{N}(Y|\mu, \Sigma)$ approximiert werden, wobei $K$ die Anzahl der Spannungsmessungen ist. Die mehrdimensionale Normalverteilung kann hierbei grundsätzlich ebenfalls Kovarianzen, das heißt Korrelationen, über die Matrix $\Sigma$ berücksichtigen. Weiterhin ist $\mu$ der Vektor der Erwartungswerte.

Mit anderen Worten wird $p(Y|G, a)$ bevorzugt durch eine mehrdimensionale Normalverteilung approximiert.

In einer vorteilhaften Weiterbildung der Erfindung sind die Leistungsmesswerte $X$ Messwerte an den Ortsnetzstationen und die Spannungsmesswerte $Y$ Messwerte an den Endverbrauchern.

Mit anderen Worten werden die Leistungsmesswerte bevorzugt an den Ortsnetzstationen und die Spannungsmesswerte bevorzugt an den Endverbrauchern erfasst. Die Endverbraucher können Smart-Meter aufweisen, die eine Spannungsmessung ermöglichen. An den Ortsnetzstationen sind typischerweise Messvorrichtung zur Erfassung von Leistungsmesswerten installiert. Hierbei ergibt sich die Leistung an einer der Ortsnetzstationen aus der Summe der dieser zugeordneten Leistungen der Endverbraucher.

Gemäß einer vorteilhaften Ausgestaltung der Erfindung erfolgt das Ermitteln der ersten A-posteriori-Verteilung $p(a|X, Y)$ mittels eines Markow-Chain-Monte-Carlo-Verfahrens.

Hierbei werden insbesondere iterativ alle Endverbraucher innerhalb desselben Netzsegments zu benachbarten Ortsnetzstationen zugeordnet. Hierbei wird sichergestellt, dass die Netzverbindungen aufrechterhalten werden. Nach einer ausreichenden Anzahl von Iterationen konvergiert die Markov-Kette mit dem gelernten Modell und stellt technisch und physikalisch sinnvolle Zuordnungen bereit, welche die bekannten Informationen und Messwerte respektieren.

In einer vorteilhaften Weiterbildung der Erfindung werden für das Ermitteln der zweiten A-posteriori-Verteilung $p(G|a, X, Y)$ die Anzahl der Netztopologien G durch physikalische und/oder technische Randbedingungen eingeschränkt.

Mit anderen Worten werden vorteilhafterweise beim Samplen der Netztopologien die technischen und/oder physikalischen Randbedingungen berücksichtigt. Insbesondere können hierfür Lastflussrechnungen durchgeführt werden. Dadurch werden die möglichen Netztopologien zusätzlich auf technisch und/oder physikalisch sinnvolle Netztopologien eingeschränkt. Hierdurch kann die numerische Effizienz und Genauigkeit des Verfahrens weiter verbessert werden.

Gemäß einer vorteilhaften Ausgestaltung der Erfindung wird die Netztopologie G* durch G* = argmax$_G$ [$p(G|X, Y)$] ermittelt.

Mit anderen Worten wird basierend auf der ermittelten Wahrscheinlichkeitsverteilung der Netztopologien (Netztopologieverteilung) die wahrscheinlichste Netztopologie als Netztopologie des Stromnetzes bestimmt. Dadurch kann vorteilhafterweise trotz der Unsicherheiten eine wahrscheinlichste Netztopologie bestimmt werden. Diese kann zur Steuerung/Regelung des Stromnetzes, insbesondere für eine Netzzustandsschätzung verwendet werden. Dadurch wird eine effizientere und genauere Steuerung/Regelung des Stromnetzes ermöglicht.

In einer vorteilhaften Weiterbildung der Erfindung ist das Stromnetz als Mittelspannungsnetz oder Niederspannungsnetz ausgebildet.

Die Erfindung ist insbesondere für Mittelspannungsnetze und/oder Niederspannungsnetze vorteilhaft, da über diese typischerweise unzureichende Informationen, insbesondere bezüglich ihrer Netztopologie, vorliegen. Die Erfindung löst dieses technische Problem über einen probabilistischen Ansatz, bei dem mittels Bayesschen Methoden eine verbesserte Verteilung von Netztopologien und/oder eine wahrscheinlichste Netztopologie effizient ermittelt werden kann.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1 ein Stromnetz mit mehreren Ortsnetzstationen und mehreren Endverbrauchern und einer möglichen Zuordnung sowie Netztopologie; und

Figur 2 ein Ablaufdiagramm eines Verfahrens zur Ermittlung einer Netztopologieverteilung gemäß einer Ausgestaltung der Erfindung.

Gleichartige, gleichwertige oder gleichwirkende Elemente können in einer der Figuren oder in den Figuren mit denselben Bezugszeichen versehen sein.

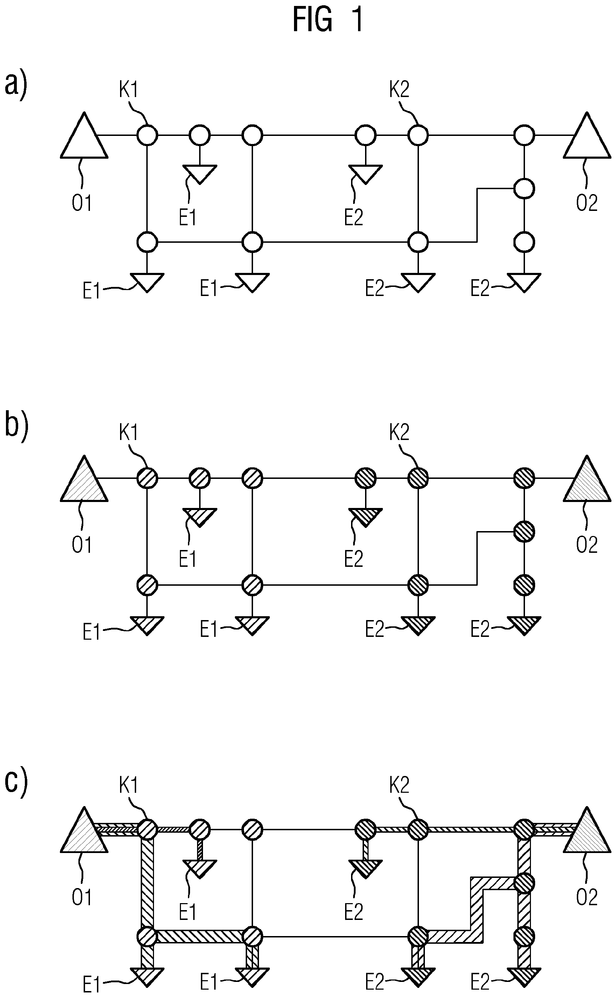

Die Figur 1 zeigt ein schematisches Stromnetz. Das Stromnetz umfasst mehrere Ortsnetzstationen O1, O2, mehrere Endverbraucher E1, E2 sowie mehrere Netzknoten K1, K2. Die Figur 1 umfasst drei Teilfiguren, die mit a), b) und c) gekennzeichnet sind.

Die Teilfigur a) zeigt das Stromnetz in Form eines Basisgraphen, der als Ausgangsgraphen für eine Topologie dient. Hierbei sind die Zuordnungen der Endverbraucher E1, E2 zu den Ortsnetzstationen O1, O2 sowie die Topologie, das heißt der Verlauf der Leitungen zwischen den Netzknoten K1, K2 zunächst unbekannt.

Die Teilfigur b) zeigt eine mögliche Zuordnung $a$ der Endverbraucher E1, E2 zu den Ortsnetzstationen O1, O2. Hierbei ist jeder Endverbraucher E1, E2 genau einer der Ortsnetzstation O1, O2 zugeordnet. Im vorliegenden Ausführungsbeispiel sind die Endverbraucher E1 der Ortsnetzstation O1 und die Endverbraucher E2 der Ortsnetzstation O2 zugeordnet. Die Netzknoten K1 sind mit der Ortsnetzstation O1 und die Netzknoten K2 sind mit der Ortsnetzstation O2 assoziiert. Grundsätzlich sind jedoch noch viele weitere Zuordnungen denkbar.

Die Zuordnung $a$ umfasst somit nicht die vollständigen Topologieinformationen, da weiterhin gemäß der Teilfigur b) unbekannt ist, wie genau die Leitungen des Stromnetzes über die Netzknoten K1, K2 von den jeweiligen Ortsnetzstationen 01, 02 zu den Endverbraucher E1, E2 verlaufen. Mit anderen Worten ist aus der Zuordnung lediglich bekannt, dass die Endverbraucher E1 an der Ortsnetzstation O1 und die Endverbraucher E2 an der Ortsnetzstation O2 angebunden sind.

Eine mögliche Topologie des Stromnetzes beziehungsweise ein mögliches Netzmodell für die Zuordnung gemäß Teilfigur b) ist in der Teilfigur c) dargestellt.

Hierbei sind die Leitungen der dargestellten Topologie durch schraffierte Bereiche gekennzeichnet.

Das zweistufige Verfahren gemäß der Erfindung und insbesondere das Vorgehen über die Zuordnungen ermöglicht somit eine Vorauswahl an technisch sinnvollen Netztopologien, denn diese müssen konsistent mit den betrachteten Zuordnungen sein. Somit kann der Raum aller Netztopologien für das Verfahren eingeschränkt werden, wodurch dieses numerisch effizienter und für komplexere, größere Stromnetze anwendbar wird. Es werden somit hauptsächlich Netztopologien betrachtet, die technisch und/oder physikalisch sinnvoll sind.

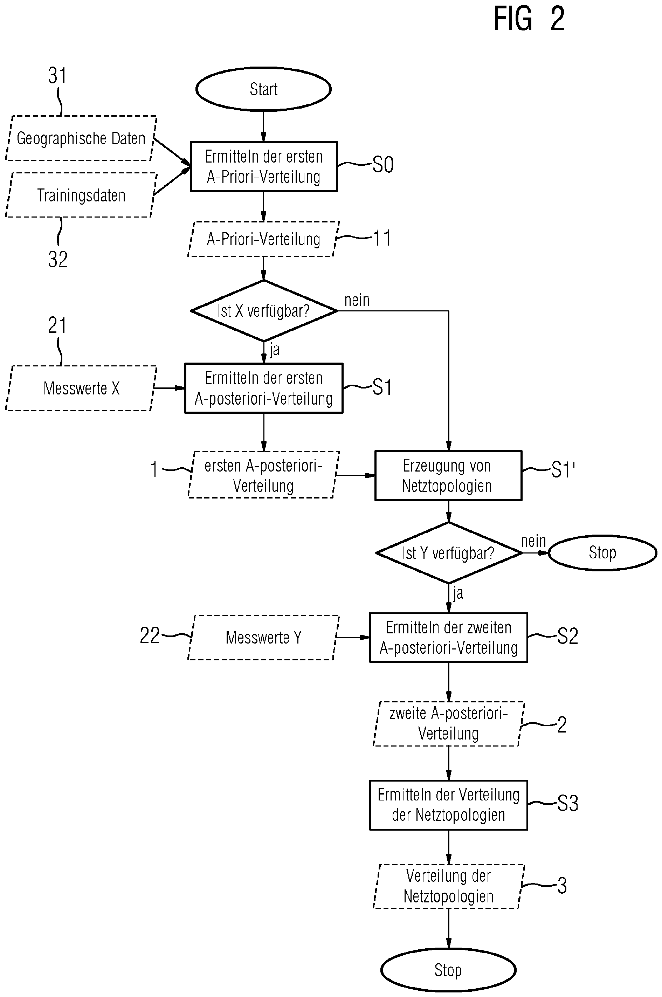

Die Figur 2 zeigt ein Ablaufdiagramm eines Verfahrens zur Ermittlung einer Netztopologieverteilung $p(G|X, Y)$ 3 gemäß einer Ausgestaltung der Erfindung.

Gemäß einem nullten Schritt S0 wird zunächst eine A-priori-Verteilung $p(a)$ 11 von Zuordnungen $a$ ermittelt. Hierzu können geographische Daten 31 und/oder Trainingsdaten 32 und/oder weitere bekannte Informationen/Daten über das betrachtete Stromnetz verwendet werden. Nach dem Schritt S0 ist somit die A-priori-Verteilung $p(a)$ 11 der Zuordnungen $a$ ermittelt.

In einem Zwischenschritt wird anschließend abgefragt, ob Leistungsmessungen $X$, insbesondere an den Ortsnetzstationen verfügbar sind. Dies ist typischerweise der Fall.

Sind Leistungsmessungen $X$ 21 beziehungsweise Leistungsmesswerte $X$ 21 verfügbar, so wird die erste A-posteriori-Verteilung 1 von Zuordnungen $a$ mittels $p(a|X) \propto p(X|a) \cdot p(a)$ im ersten Schritt S1 ermittelt. Die Likelihood-Verteilung $p(X|a)$ beziehungsweise Messverteilung $p(X|a)$ kann mittels den bekannten Erwartungswerten der Messwerte $X$ und ihrer bekannten Unsicherheiten (Varianz, gegebenenfalls ebenfalls Kovarianz) durch eine mehrdimensionale Normalverteilung approximiert werden. Somit ist die Likelihood-Verteilung $p(X|a)$ und die im Schritt S0 ermittelte A-priori-Verteilung $p(a)$ 11 der Zuordnungen bekannt, sodass mittels des Satzes von Bayes die erste A-posteriori-Verteilung 1 der Zuordnungen $a$ mittels $p(a|X) \propto p(X|a) \cdot p(a)$ im Schritt S1 ermittelt werden kann.

Nach dem Schritt S1 werden im Schritt S1' mögliche Netztopologien erzeugt beziehungsweise gesampelt. Hierbei werden nur Netztopologien berücksichtigt, die zu einer Zuordnung mit einer ausreichend hohen Wahrscheinlichkeit korrespondieren. Mit anderen Worten wird hierbei die Bedingung $p(a|X) > p_{min}$ berücksichtigt, das heißt, dass die zu einer Topologie zugehörige Zuordnung bei gegebenen Messwerten $X$ eine Wahrscheinlichkeit größer dem Schwellenwert $p_{min}$ aufweisen muss. Somit kann der Raum der möglichen Netztopologien beziehungswiese der Zuordnungen technisch sinnvoll, das heißt insbesondere entsprechend den Messwerten $X$, eingeschränkt werden. Mit anderen Worten werden zur Erzeugung der Topologien lediglich wahrscheinliche beziehungsweise technisch und praktisch ausreichend sinnvolle Zuordnungen mit $p(a|X) > p_{min}$

berücksichtigt.

Basierend auf den erzeugten beziehungsweise gesampelten Netztopologien wird dann die zweite A-posteriori-Verteilung $p(G|a, X, Y)$ 2 im Schritt S2 ermittelt. Hierzu werden im dargestellten Ausführungsbeispiel lediglich Spannungsmessungen $Y$ 22 berücksichtigt, sodass $p(G|a, X, Y) \propto p(G|a, Y)$ ist. Die zweite A-posteriori-Verteilung $p(G|a, X, Y)$ 2 wird mittels Satzes von Bayes über $p(G|a, Y) \propto p(Y|G, a) \cdot p(G|a)$ ermittelt.

In einem dritten Schritt S3 des Verfahrens wird dann die Netztopologieverteilung 3 mittels der ersten und zweiten A-posteriori-Verteilung 1, 2 durch $p(G|X, Y) = \Sigma_a p(G|a, X, Y) \cdot p(a|X, Y)$ ermittelt.

Das oben beschriebene Verfahren umfasst somit im Wesentlichen zwei Stufen.

In einer ersten Stufe werden Stichproben von Zuordnungen, insbesondere unter der Berücksichtigung von Leistungsmessungen an den Ortsnetzstationen und/oder weiterer Informationen, erzeugt beziehungsweise berechnet.

In einer zweiten Stufe werden mögliche Netztopologien, insbesondere unter der Berücksichtigung von Spannungsmessungen an den Endverbrauchern, erzeugt beziehungsweise berechnet. Hierbei können zusätzlich Lastflussberechnungen verwendet werden, sodass sogenannte Power-Flow-Ready Topologien erzeugt und zur Ermittlung der Verteilungen berücksichtigt werden.

Die in der ersten und zweiten Stufe erzeugten A-posteriori-Verteilungen (erste und zweite A-posteriori-Verteilung) werden dann zur Ermittlung der Netztopologieverteilung herangezogen.

Das vorgeschlagene zweistufige Verfahren weist insbesondere den Vorteil auf, dass nicht alle möglichen Zuordnungen und/oder Netztopologien berücksichtigt beziehungsweise erzeugt oder betrachtet werden müssen. Es werden nach der ersten Stufe nur Zuordnungen betrachtet, die bei gegebenen Messwerten und bekannten Informationen eine ausreichende Wahrscheinlichkeit aufweisen, das heißt ausreichend wahrscheinlich sind. Insbesondere gibt es für ein Strommetz deutlich weniger Zuordnungen als Netztopologien, sodass diese numerisch besser handhabbar sind und dennoch eine Vorauswahl technisch sinnvoller Netztopologien ermöglichen. Es ist somit von Vorteil zunächst die wahrscheinlichen beziehungsweise die bei gegebenen Leistungsmessungen technisch sinnvollen Zuordnungen zu bestimmen und nur Netztopologien zu betrachten, die zu einer ausreichend wahrscheinlichen Zuordnung korrespondieren. Insgesamt wird dadurch die numerische Stabilität erhöht und die numerische Laufzeit reduziert. Eine Berücksichtigung aller Zuordnungen und Netztopologien wäre für reale Stromnetze numerisch in praktikablen Rechenzeiten nicht handhabbar. Die vorliegende Erfindung löst somit dieses technische Problem und stellt dennoch eine ausreichend genaue Netztopologieverteilung beziehungsweise Netztopologie bereit.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| 1 | erste A-posteriori-Verteilung |
|---|---|
| 2 | zweite A-posteriori-Verteilung |
| 3 | Wahrscheinlichkeitsverteilung der Netztopologien |
| 11 | A-Priori-Verteilung |
| 21 | Leistungsmesswerte |
| 22 | Spannungsmesswerte |
| 31 | geographische Daten |
| 32 | Trainingsdaten |

| S0 | Ermittlung A-Priori-Verteilung |
|---|---|
| S1 | Ermittlung der ersten A-posteriori-Verteilung |
| S1' | Erzeugung von Netztopologien |
| S2 | Ermittlung der zweiten A-posteriori-Verteilung |
| S3 | Ermittlung der Wahrscheinlichkeitsverteilung der Netztopologien |

| O1,O2 | Ortsnetzstationen |
|---|---|
| E1, E2 | Endverbraucher |
| K1, K2 | Netzknoten |

**Patentansprüche**

1. Computergestütztes Verfahren zur Ermittlung einer Wahrscheinlichkeitsverteilung $p(G|X, Y)$ (3) von Netztopologien G eines Stromnetzes, wobei das Stromnetz mehrere Ortsnetzstationen (O1, O2) und Endverbraucher (E1, E2) aufweist, wobei $X$ mit Leistungsmesswerten (21) und $Y$ mit Spannungsmesswerten (22) des Stromnetzes assoziiert ist, **gekennzeichnet durch** folgende Schritte:

   - (S1) Ermitteln einer ersten A-posteriori-Verteilung $p(a|X, Y)$ (1), wobei $a$ eine Zuordnung der Endverbraucher (E1, E2) zu den Ortsnetzstationen (O1, O2) ist;
   - (S2) Ermitteln einer zweiten A-posteriori-Verteilung $p(G|a, X, Y)$ (2), wobei hierbei lediglich Zuordnungen mit $p(a|X, Y) > p_{min}$ berücksichtigt werden, und $p_{min} \geq 0$ ein festgelegter minimaler Schwellenwert ist; und
   - (S3) Ermitteln der Wahrscheinlichkeitsverteilung $p(G|X, Y)$ (3) der Netztopologien G des Stromnetzes mittels der ersten und zweiten A-posteriori-Verteilung (2, 3) durch $p(G|X, Y) = \Sigma_a p(G|a, X, Y) \cdot p(a|X, Y)$.

2. Verfahren gemäß Anspruch 1, **gekennzeichnet dadurch, dass** die erste A-posteriori-Verteilung $p(a|X, Y)$ (1) mittels $p(a|X, Y) \propto p(X|a, Y) \cdot p(Y|a) \cdot p(a)$ ermittelt wird, wobei $p(X|a, Y)$ und $p(Y|a)$ die jeweiligen Messverteilungen (21) und $p(a)$ die A-Priori-Verteilung (11) der Zuordnungen ist.

3. Verfahren gemäß Anspruch 2, **gekennzeichnet dadurch, dass** die erste A-posteriori-Verteilung $p(a|X, Y)$ (1) durch $p(a|X, Y) \propto p(a|X) \propto p(X|a) \cdot p(a)$ approximiert wird.

4. Verfahren gemäß Anspruch 3, **gekennzeichnet dadurch, dass** $p(X|a)$ durch eine mehrdimensionale Normalverteilung approximiert wird.

5. Verfahren gemäß einem der vorhergehenden Ansprüche, **gekennzeichnet dadurch, dass** die zweite A-posteriori-Verteilung $p(G|a, X, Y)$ (2) mittels $p(G|a, X, Y) \propto p(X|G, a, Y) \cdot p(Y|G, a) \cdot p(G|a)$ ermittelt wird, wobei $p(X|G, a, Y)$ und $p(Y|G, a)$ die jeweiligen Messverteilungen (22) sind.

6. Verfahren gemäß Anspruch 5, **gekennzeichnet dadurch, dass** die zweite A-posteriori-Verteilung $p(G|a, X, Y)$ (2) durch $p(G|a, X, Y) \propto p(G|a, Y) \propto p(Y|G, a) \cdot p(G|a)$ approximiert wird.

7. Verfahren gemäß Anspruch 6, **gekennzeichnet dadurch, dass** $p(Y|G, a)$ durch eine mehrdimensionale Normalverteilung approximiert wird.

8. Verfahren gemäß einem der vorhergehenden Ansprüche, **gekennzeichnet dadurch, dass** die Leistungsmesswerte $X$ (21) Messwerte an den Ortsnetzstationen (O1, O2) und die Spannungsmesswerte $Y$ (22) Messwerte an den Endverbrauchern (E1, E2) sind.

9. Verfahren gemäß einem der vorhergehenden Ansprüche, **gekennzeichnet dadurch, dass** das Ermitteln der ersten A-posteriori-Verteilung $p(a|X, Y)$ (1) mittels eines Markow-Chain-Monte-Carlo-Verfahrens erfolgt.

10. Verfahren gemäß einem der vorhergehenden Ansprüche, **gekennzeichnet dadurch, dass** für das Ermitteln der zweiten A-posteriori-Verteilung $p(G|a, X, Y)$ (2) die Anzahl der Netztopologien G durch physikalische und/oder technische Randbedingungen eingeschränkt wird.

11. Verfahren zur Ermittlung einer Netztopologie G* eines Stromnetzes, wobei das Stromnetz mehrere Ortsnetzstationen (O1, O2) und Endverbraucher (E1, E2) aufweist, bei dem mit dem Stromnetz assoziierte Leistungsmesswerte $X$ (21) und Spannungsmesswerte $Y$ (22) bereitgestellt werden, **gekennzeichnet dadurch, dass** das Ermitteln der Netztopologie G* mittels einer gemäß einem der vorhergehenden Ansprüche ermittelten Wahrscheinlichkeitsverteilung $p(G|X, Y)$ (3) von Netztopologien G des Stromnetzes erfolgt.

12. Verfahren gemäß Anspruch 11, **gekennzeichnet dadurch, dass** die Netztopologie G* durch G* = $\text{argmax}_G[p(G|X, Y)]$ ermittelt wird.

13. Steuereinheit zur Steuerung eines Stromnetzes mit mehreren Ortsnetzstationen (O1, O2) und Endverbrauchern (E1, E2), umfassend eine Recheneinheit, **dadurch gekennzeichnet, dass** die Recheneinheit dazu ausgebildet und eingerichtet ist, ein Verfahren gemäß einem der vorhergehenden Ansprüche durchzuführen.

14. Steuereinheit gemäß Anspruch 13, **gekennzeichnet dadurch, dass** das Stromnetz als Mittelspannungsnetz oder Niederspannungsnetz ausgebildet ist.

15. Computerprogrammprodukt, umfassend Befehle, die bei der Ausführung des Programms durch eine Recheneinheit, insbesondere einen Computer, diesen veranlassen, ein Verfahren und/oder Schritte des Verfahrens gemäß einem der Ansprüche 1 bis 11 auszuführen.

# FIG 1

a)

b)

c)

# FIG 2

**31**

Geographische Daten

Trainingsdaten

**32**

Start

Ermitteln der ersten A-Priori-Verteilung —— S0

A-Priori-Verteilung —— 11

Ist X verfügbar? — nein

ja

**21**

Messwerte X

Ermitteln der ersten A-posteriori-Verteilung —— S1

**1** — ersten A-posteriori-Verteilung

Erzeugung von Netztopologien —— S1'

Ist Y verfügbar? — nein → Stop

ja

**22** — Messwerte Y

Ermitteln der zweiten A-posteriori-Verteilung —— S2

zweite A-posteriori-Verteilung —— **2**

Ermitteln der Verteilung der Netztopologien —— S3

Verteilung der Netztopologien —— **3**

Stop

**EUROPÄISCHER RECHERCHENBERICHT**

Nummer der Anmeldung

EP 24 21 1470

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2023 203031 B3 (SIEMENS AG [DE]) 1. August 2024 (2024-08-01) | 1-8, 10-15 | INV. H02J13/00 |
| Y | * Absätze [0059], [0065], [0073] * | 9 | H02J3/00 |
| | * Absätze [0106], [0097], [0102] * | | |
| | * Absätze [0104], [0108], [0107], [0060] * | | |
| | * Absätze [0094], [0098] * | | |
| | * Absätze [0032], [0052], [0088] * | | |
| | ----- | | |
| Y | ANDREAS BOTT ET AL: "Deep Learning-enabled MCMC for Probabilistic State Estimation in District Heating Grids", ARXIV.ORG, CORNELL UNIVERSITY LIBRARY, 201 OLIN LIBRARY CORNELL UNIVERSITY ITHACA, NY 14853, 24. Mai 2023 (2023-05-24), XP091518426, DOI: 10.1016/J.APENERGY.2023.120837 * Seite 8, Absatz 3.3 * | 9 | |
| | ----- | | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 18. März 2025 | Maucher, Bastian |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 1470

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2025

| Im Recherchenbericht angeführtes Patentdokument | Datum der Veröffentlichung | Mitglied(er) der Patentfamilie | Datum der Veröffentlichung |
|---|---|---|---|
| DE 102023203031 B3 | 01-08-2024 | DE 102023203031 B3 | 01-08-2024 |
| | | WO 2024199851 A1 | 03-10-2024 |

Für nähere Einzelheiten zu diesem Anhang : siehe Amtsblatt des Europäischen Patentamts, Nr.12/82